# EUROPÄISCHE PATENTSCHRIFT

(11) **EP 4 252 087 B1**
(45) Veröffentlichungstag und Bekanntmachung des Hinweises auf die Patenterteilung: **21.02.2024**
(21) Anmeldenummer: 21823253.6
(22) Anmeldetag: 29.11.2021
(51) Int. Cl.: G05B 19/414, G05B 13/02, H02P 5/747, H02P 5/69

(54) **BETRIEB EINES MEHRACHSSYSTEMS**
OPERATION OF A MULTI-AXIS SYSTEM
FONCTIONNEMENT D'UN SYSTÈME MULTIAXE

(30) Priorität: 30.11.2020 AT 510462020
(43) Veröffentlichungstag der Anmeldung: 04.10.2023
(73) Patentinhaber: B&R Industrial Automation GmbH, 5142 Eggelsberg (AT)
(72) Erfinder: WEISSBACHER, Joachim, 5142 Eggelsberg (AT)
(74) Vertreter: Patentanwälte Pinter & Weiss OG
(86) Internationale Anmeldenummer: PCT/EP2021/083402
(87) Internationale Veröffentlichungsnummer: WO 2022/112567

(56) Entgegenhaltungen:
- CN-A- 109 495 026
- DE-B3-102016 218 464

## Beschreibung

Die gegenständliche Erfindung betrifft ein Verfahren zum Betrieb eines Mehrachssystems mit einer Mehrzahl an Basisachsen und einer Antriebsachse, welche an Kopplungspunkten mechanisch mit den Basisachsen gekoppelt ist, wobei die Positionen der Kopplungspunkte an den Basisachsen durch einen zugehörigen Motor veränderbar sind, um die Antriebsachse in Relation zu den Basisachsen zu bewegen, wobei den Motoren zugehörige Regelungseinheiten vorgesehen sind, welche aus vorgegeben Sollgrößen, vorzugsweise aus Sollpositionen, und aus zugehörigen sich am Motor einstellenden korrespondierenden Istgrößen Stellgrößen ermitteln und den Motoren vorgeben, um die korrespondierenden Istgrößen, vorzugsweise die Positionen, entsprechend der vorgegeben Sollgrößen zu regeln. Weiters betrifft die gegenständliche Erfindung ein Mehrachssystem umfassend eine Mehrzahl an Basisachsen und eine Antriebsachse wobei die Antriebsachse an Kopplungspunkten mechanisch mit den Basisachsen gekoppelt ist und die Positionen der Kopplungspunkte an den Basisachsen jeweils durch einen zugehörigen Motor veränderbar sind, um die Antriebsachse in Relation zu den Basisachsen zu bewegen, wobei jeweils den Motoren zugehörigen Regelungseinheiten vorgesehen sind, welche ausgestaltet sind, aus vorgegebenen Sollgrößen, vorzugsweise aus Sollpositionen, und aus zugehörigen sich am Motor einstellenden korrespondierenden Istgrößen Stellgrößen zu ermitteln und den Motoren vorzugeben, um die zugehörigen korrespondierenden Istgrößen, vorzugsweise die Positionen, entsprechend der Sollgrößen zu regeln.

In gekoppelten Mehrachssystemen ist eine Antriebsachse vorgesehen, welche jeweils über Koppelpunkte mit einer Mehrzahl an Basisachsen verbunden ist. Die Position der Kopplungspunkte können in Relation zu den Basisachsen bewegt werden, womit die Antriebsachse in Relation zu den Basisachsen bewegt wird. Es seien beispielhaft Gantry-Systeme und Spritzgießmaschinen als gekoppelte Mehrachssysteme genannt. Gantry-Systeme werden beispielsweise in Laserschneidern, Glasschneidern, Holzbearbeitungsmaschinen etc. verwendet. Dabei sind Objekte, z.B. Werkzeuge, an der Antriebsachse angeordnet, welche somit durch die Bewegung der Antriebsachse hochpräzise in einem Arbeitsbereich positioniert werden können. Es können auch Transportsysteme mit einer Mehrzahl an miteinander mechanisch gekoppelten Transporteinheiten (Langstatorlinerarmotoren, Planarmotoren, Stetigförderer etc.) als Mehrachssysteme vorgesehen sein, wobei die Transporteinheiten als Basisachsen angesehen werden, welche über eine Antriebsachse mechanisch gekoppelt sind.

Es ist im Mehrachssystem jeweils ein den Kopplungspunkten zugeordneter Motor vorgesehen, um die Position der Kopplungspunkte an den Basisachsen zu bewegen. Die Motoren können rotativer oder linearer Natur sein und z.B. als Schrittmotoren ausgeführt sein. Es treten an den Motoren jeweils eine Anzahl Istgrößen, z.B. Positionen, Geschwindigkeiten, Beschleunigungen, Drehmomente, Ströme etc., auf. Pro Motor und damit pro Basisachse ist jeweils eine Regelungseinheit vorgesehen, welche aus vorgegeben Sollgrößen und aus zugehörigen sich am Motor einstellenden korrespondierenden Istgrößen Stellgrößen ermittelt und dem zugehörigen Motor vorgibt, um die zugehörige Istgrößen, z.B. die Positionen der Kopplungspunkte, zu regeln. Dabei stellen sich jeweils nicht nur die den Sollgrößen korrespondierenden Istgrößen (z.B. eine der Sollposition korrespondierende Position) ein, sondern die erwähnte Anzahl von Istgrößen. Die korrespondierende Istgröße ist somit ausgewählt aus der Anzahl Istgrößen. Um zu verhindern, dass sich die Basisachsen mechanisch verspannen, werden die Sollpositionen der zugehörigen Regelungseinheiten von einem zentralen Sollwertgenerator vorgegeben. Das bedeutet, dass im Normalbetrieb die Motoren nur im Verbund geregelt werden.

Um das Regelverhalten der Regelungseinheiten zu verbessern, kann pro Regelungseinheit eine Vorsteuereinheit zur Durchführung einer Vorsteuerung vorgesehen sein. Die Vorsteuereinheit beaufschlagt die Stellgröße der zugehörigen Regelungseinheiten mit einem Vorsteuerwert, welcher abhängig von der Sollgröße, aber unabhängig von der korrespondierenden Istgröße und damit von der Regelstrecke ist. Da die Vorsteuerung eine Steuerung und keine Regelung darstellt, kann sie somit das Regelverhalten verbessern, ohne die Stabilität des Regelkreises zu gefährden. Mittels der Vorsteuerwerte kann ein zusätzlicher Stellgrößen-Bedarf berücksichtigt werden, welcher z.B. aufgrund eines bestimmten Sollwertverlaufs zu erwarten ist.

Die Vorsteuerung wird vor dem eigentlichen Betrieb mit geeigneten Vorsteuerparametern parametriert. Bei geeigneter Wahl der Vorsteuerparameter kann die Regelung optimiert werden, z.B. indem das Schleppfehlerverhalten verbessert wird. Um mechanische Beschädigungen des Mehrachssystems zu verhindern, wurde bislang auf automatisierte Parametrierung der Vorsteuereinheiten verzichtet. Vielmehr wird die Ermittlung der Vorsteuerparameter von Mehrachssystemen mit miteinander gekoppelten Achsen händisch durchgeführt, was sehr zeitintensiv und auch fehleranfällig ist. Die CN 109495026 A beschreibt ein Gantry-System als Mehrachssystem wobei für die Drehzahl ein Vorsteuerungsvorgang vorgesehen ist, jedoch keine Identifizierung von Vorsteuerparametern beschrieben wird.

Die DE 10 2016 218464 B3 zeigt demgegenüber ein Verfahren zur Fahrdynamikregelung für ein Kraftfahrzeug, wobei eine Stellgröße der Fahrdynamik über einen Regelkreis mit zwei Freiheitsgraden, bestehend aus einer Vorsteuerung und einem Regler, geregelt wird, wobei auf Mehrachssysteme allerdings nicht näher eingegangen wird und mit Mehrachssystemen verbundene Spezifika und Probleme folglich nicht näher aufgegriffen werden.

Weiterer Stand der Technik ist in der CN 109495026 A offenbart.

Es ist eine Aufgabe der gegenständlichen Erfindung, ein optimiertes Mehrachssystem mit mechanisch gekoppelten Achsen anzugeben.

Diese Aufgabe wird erfindungsgemäß durch ein Verfahren gelöst, wobei jeweils eine den Motoren zugehörige Vorsteuereinheit vorgesehen ist, die jeweils ausgehend von der zugehörigen vorgegebenen Sollgröße einen Vorsteuerwert ermittelt und der zugehörigen Stellgröße überlagert, wobei während eines Vorsteueridentifikationsvorgangs den Vorsteuereinheiten zugehörigen Identifikationseinheiten sich am Motor einstellende Identifikations-Istgrößen vorgegeben werden, wobei unter Verwendung der Identifikations-Istgrößen Vorsteuerparameter identifiziert werden und die Regelungseinheiten mit den Vorsteuerparametern parametriert werden. Weiters wird die Aufgabe gelöst, indem jeweils den Basisachsen zugehörige Vorsteuereinheiten vorgesehen sind, welche ausgestaltet sind, aus den Sollgrößen Vorsteuerwerte zu ermitteln und den Stellgrößen zu überlagern und indem jeweils den Basisachsen zugehörige Identifikationseinheiten vorgesehen sind, welche jeweils ausgestaltet sind, unter Verwendung von sich am Motor einstellenden Identifikations-Istgrößen Vorsteuerparameter zu identifizieren und die Vorsteuereinheiten mit den Vorsteuerparametern zu parametrieren. Das Mehrachssystem wird dann mit den Regelungseinheiten und entsprechend parametrierten Vorsteuereinheiten betrieben.

Die Identifikations-Istgröße stellt sich am Motor ein und entspricht vorzugsweise der korrespondierenden Istgröße. Die Regelungseinheiten geben jeweils den zugehörigen Motoren Stellgrößen vor, um die korrespondierenden Istgröße entsprechend der zugehörigen Sollgröße zu regeln, womit wiederum die Position der zugehörigen Basisachse geregelt wird. Dabei stellen sich an den Motoren jeweils eine Mehrzahl an Istgrößen ein. Den Identifikationseinheiten wird jeweils eine Identifikations-Istgröße, ausgewählt aus der Mehrzahl Istgrößen zugeführt. Die Identifikationseinheiten ermitteln unter Verwendung der jeweiligen Identifikations-Istgröße rasch, auf einfache Weise und automatisiert Vorsteuerparameter. Diese Vorsteuerparameter werden jeweils der zugehörigen Regelungseinheit zur Parametrierung zur Verfügung gestellt. Die Vorsteuereinheit beaufschlagt im Normalbetrieb die Stellgröße der zugehörigen Regelungseinheit jeweils mit einem Vorsteuerwert. Damit kann das Schleppfehlerverhalten verbessert werden, womit präzisere Prozessschritte ermöglicht werden. Wird beispielsweise ein an der Antriebsachse angeordnetes Werkzeug als Objekt durch das Mehrachssystem angesteuert, so kann bei Durchführung eines Vorsteuerungsvorgangs unter Verwendung erfindungsgemäß ermittelter Vorsteuerparameter eine höhere Konturtreue und damit eine höhere Prozessqualität erreicht werden.

Es können während dem Vorsteueridentifikationsvorgang den Identifikationseinheiten miteinander synchronisierte Sollgrößen vorgegeben und von den Identifikationseinheiten zur Identifikation der Vorsteuerparameter verwendet werden.

Weitere Vorsteuerparameter können aus den ermittelten Vorsteuerparametern interpoliert werden.

Es können während dem Vorsteueridentifikationsvorgang den Identifikationseinheiten Verläufe von miteinander synchronisierten Sollgrößen vorgegeben und von den Identifikationseinheiten zur Identifikation der Vorsteuerparameter verwendet werden. Es werden also während des Identifikationsvorgangs von einem Sollwertgenerator Verläufe von Sollgrößen entsprechend von Identifikationsprofilen vorgegeben. Diese Sollgrößen werden den Regelungseinheiten und Vorsteuereinheiten sowie den Identifikationseinheiten vorgegeben.

Die Identifikationsprofile sind derart ausgestaltet, um das mechanische System anzuregen und können beispielsweise einen rampenförmigen Sollwertverlauf beinhalten. Es können auch Rauschsignale, z.B. PRBS (pseudorandom binary sequence) Signale verwendet werden.

Ebenso können während dem Vorsteueridentifikationsvorgang den Identifikationseinheiten Verläufe der Identifikations-Istgrößen vorgegeben und von den Identifikationseinheiten zur Identifikation der Vorsteuerparameter verwendet werden.

Vorzugsweise wird für den Vorsteueridentifikationsvorgang jeweils eine Sollposition (oder ein Verlauf einer Sollposition als Identifikationsprofil) vorgegeben und ein Iststrom oder ein Istmoment (oder ein Verlauf eines Iststroms oder eines Istmoments) als Identifikations-Istgröße verwendet. Somit werden der Regelungseinheit, der Vorsteuereinheit sowie der Identifikationseinheit jeweils Sollpositionen (oder Verläufe der Sollposition) vorgegeben, wobei sich neben der Position als korrespondierende Istgröße (welche der Regelungseinheit zur Ermittlung der Stellgrößen rückgeführt wird) auch Istströme und/oder Istmomente als Istgrößen einstellen. Diese Istströme und/oder Istmomente (oder deren Verläufe) werden jeweils von der Identifikationseinheit gemeinsam mit der Sollposition (oder deren Verlauf) verarbeitet, um die Vorsteuerparameter zu bestimmen.

Vorzugsweise wird für den Vorsteueridentifikationsvorgang jeweils eine Position (oder ein Verlauf einer Position) als Identifikations-Istgröße verwendet. Somit werden der Regelungseinheit und der Vorsteuereinheit jeweils die Sollgrößen (vorzugsweise Sollpositionen) vorgegeben, wobei Positionen als korrespondierende Istgrößen einstellen, welche der Regelungseinheit zur Ermittlung der Stellgrößen rückgeführt wird. Diese Positionen (oder deren Verläufe) dienen jedoch nicht nur als korrespondierende Istgrößen, sondern auch als Identifikations-Istgrößen und werden somit von der jeweiligen Identifikationseinheit gemeinsam mit der Sollposition der Sollgröße (oder deren Verlauf) verarbeitet, um die Vorsteuerparameter zu bestimmen.

Der Vorsteueridentifikationsvorgang erfolgt vorzugsweise vor einem Normalbetrieb des Mehrachssystems. Damit wird das Mehrachssystem erst mit entsprechend der identifizierten Vorsteuerparameter parametrierten Vorsteuereinheiten in den Normalbetrieb geschaltet. Um die Vorsteuerparameter zu optimieren, können die Vorsteuereinheiten auch erst mit den Vorsteuerparametern parametriert werden und weiterhin Sollgrößen (oder Verläufe von Sollgrößen entsprechend des Identifikationsprofils) angesteuert werden. Damit werden optimierte Vorsteuerparameter erhalten, welche zur optimierten Parametrierung der Vorsteuereinheiten verwendet werden. Das Mehrachssystem kann dann mit Vorsteuereinheiten, die mittels der optimierten Vorsteuerparameter parametriert wurden, in den Normalbetrieb geschaltet werden.

Es können die Vorsteuerparameter aber auch während des Normalbetriebs identifiziert und damit optimiert werden. Dabei werden als Sollgrößen die im Normalbetrieb vorgesehenen Bewegungsprofile anstatt spezieller Identifikationsprofile verwendet, wobei die Bewegungsprofile geeignet sind, den Regelkreis anzuregen.

Die miteinander synchronisierten Sollgrößen (oder deren Verläufe als Identifikationsprofile) können von einem zentralen Sollwertgenerator oder von jeweils miteinander synchronisierten Sollwertgeneratoren vorgegeben werden.

Die Basisachsen sind vorzugsweise parallel zueinander angeordnet.

Zumindest ein Teil der Motoren, vorzugsweise jeder Motor, kann einen rotativen Motor oder einen Linearmotor darstellen.

Während des Vorsteueridentifikationsvorgangs können beschleunigungsproportionale und/oder geschwindigkeitsproportionale und/oder richtungsabhängige und/oder konstante Komponenten der Vorsteuerparameter ermittelt werden. Wird eine mechanische Masse bewegt, so ist dazu eine Kraft (z.B. ein Drehmoment) erforderlich. Diese Kraft kann vorgesehen sein, um eine Trägheit zu überwinden (beschleunigungsproportional) und/oder eine viskose Reibung (geschwindigkeitsproportional) und/oder eine Haftreibung (richtungsabhängig) und/oder, insbesondere bei Hubbewegungen, die Erdanziehungskraft (konstante Komponente). Entsprechend können bei der Ermittlung der Vorsteuerparameter diese Kräfte berücksichtigt werden.

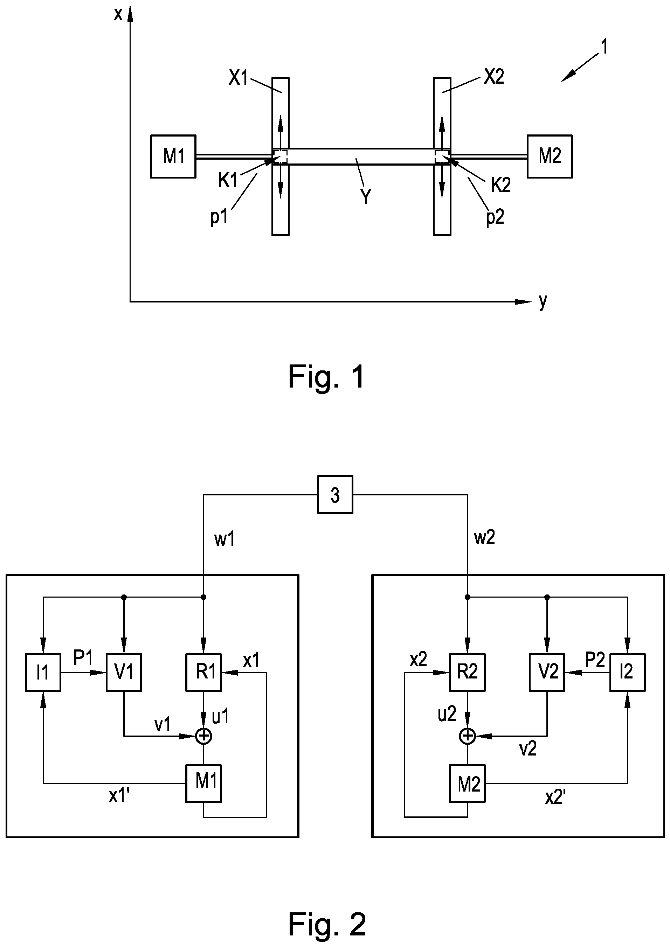

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 ein beispielhaftes Mehrachssystem mit Basisachsen, welche über eine Antriebsachse mechanisch gekoppelt sind,
Fig.2 eine Identifikation von Vorsteuerparametern im Mehrachssystem.

Fig. 1 stellt ein Mehrachssystem 1 mit einer Mehrzahl an Basisachsen X1, X2 und einer Antriebsachse Y dar, wobei die Antriebsachse Y an Kopplungspunkten K1, K2 mechanisch mit den Basisachsen X1, X2 gekoppelt ist. Die Kopplungspunkte K1, K2 können auch als Kopplungsbereiche angesehen werden. Die Positionen p1, p2 der Kopplungspunkte K1, K2 an den Basisachsen X1, X2 sind jeweils durch einen zugehörigen Motor M1, M2 veränderbar, womit die Antriebsachse Y gegenüber den Basisachsen X1, X2 bewegbar ist. Die Motoren M1, M2 können jeweils an der Antriebsachse Y oder an der Basisachse X1, X2 angeordnet sein. Weiters kann an der Antriebsachse Y ein Objekt vorgesehen sein, deren Objektposition vorzugsweise entlang der Antriebsachse Y verschiebbar ist (nicht dargestellt). Es ist in Fig. 1 ein zweidimensionales kartesisches Koordinatensystem vorgesehen, wobei die Abszissenachse y und die Ordinatenachse x die xy-Ebene aufspannen. Die Basisachsen X1, X2 liegen hier beispielhaft parallel zur Ordinatenachse x, die Antriebsachse Y parallel zur Abszissenachse y.

Erfindungsgemäße Mehrachssysteme 1 können, z.B. in Spritzgießmaschinen, Laserschneidern, Glasschneidern, Holzbearbeitungsmaschinen etc., verwendet werden, um Bearbeitungsprozesse oder Herstellungsprozesse durchzuführen, dabei kann an der Antriebsachse Y ein Objektangeordnet sein, welches durch die Bewegung der Antriebsachse Y hochpräzise in einem Arbeitsbereich positioniert werden. Es kann beispielsweise ein Werkzeug und/oder eine Kamera als Objekt auf der Antriebsachse Y angeordnet sein, welche somit, z.B. in Bearbeitungsprozessen oder Herstellungsprozessen durch die Bewegung der Antriebsachse Y hochpräzise in einem Zielbereich (z.B. in einem Arbeitsbereich) positioniert werden kann. Vorzugsweise ist die Objektposition des Objekts entlang der Antriebsachse Y (d.h. in Fig. 1 entlang der Abszissenachse y) verschiebbar, was durch einen weiteren Motor erfolgen kann. Es ist weiters vorstellbar, dass zudem ein Feinpositioniersystem vorgesehen ist, welches nach der erfolgten Bewegung/Positionierung der Antriebsachse Y und/oder des Objekts eine zusätzliche, noch genauere Einstellung der Positionen p1, p2 und/oder des Objekts entlang der Antriebsachse Y durchführt.

Das in Fig. 1 dargestellte System 1 entspricht einem Gantry-System. Es können auch eine oder mehrere weitere Basisachsen vorgesehen sein, welche jeweils über weitere Kopplungspunkte mit der Antriebsachse Y verbunden sind. Die Positionen der weiteren Kopplungspunkte an den weiteren Basisachsen können durch einen weiteren Motor analog geregelt werden.

In Fig. 2 ist eine beispielhafte Identifikation von Vorsteuerparametern dargestellt. Die Motoren M1, M2 werden jeweils von einer Regelungseinheit R1, R2 mittels einer Stellgröße u1, u2 angesteuert, wobei sich an den Motoren M1, M2 jeweils eine Mehrzahl an Istgrößen einstellen, z.B. Positionen p1, p2, Geschwindigkeiten v1, v2, Beschleunigungen a1, a2, Drehmomente T1, T2, Ströme i1, i2 etc. Bei der Ansteuerung der Motoren M1, M2 können auch jeweils Servoverstärker und/oder elektronische 1:1-Getriebe vorgesehen sein.

Den Regelungseinheiten R1, R2 wird jeweils eine Sollgröße w1, w2 vorgegeben. Weiters wird den Regelungseinheiten R1, R2 jeweils eine den Sollgrößen w1, w2 zugehörige korrespondierenden Istgröße x1, x2 aus der Anzahl Istgrößen rückgeführt, um die Stellgröße u1, u2 zu ermitteln. Die Stellgröße u1, u2 wird jeweils wie erwähnt dem zugehörigen Motor M1, M2 vorgegeben, um jeweils die korrespondierende Istgröße x1, x2 auf die zugehörige Sollgröße w1, w2 zu regeln. Das bedeutet, dass bei Vorgabe einer Sollposition p1ₛₒₗₗ, p2ₛₒₗₗ als Sollgröße w1, w2 die Position p1, p2 als korrespondierende Istgröße x1, x2 herangezogen wird, um die Stellgrößen u1, u2 zu ermitteln.

Die korrespondierenden Istgrößen x1, x2 der jeweiligen Achsen X1, X2, d.h. der Kopplungspunkte K1, K2 sind über die Motoren M1, M2 grundlegend unabhängig voneinander veränderbar. Da die Achsen X1, X2 bzw. die Kopplungspunkte K1, K2 jedoch über die Antriebsachse Y mechanisch miteinander verbunden sind, werden die Regelungseinheiten R1, R2 im Normalbetrieb des Mehrachssystems 1, auf einen gemeinsamen Sollwertgenerator 3 gekoppelt, welcher den Regelungseinheiten R1, R2 die Sollgrößen w1, w2 synchronisiert vorgibt. Somit werden die Motoren M1, M2 im Betrieb durch Vorgabe der Sollgrößen w1, w2 des Sollwertgenerators 3 nur noch im Verbund bewegt, um mechanische Verspannungen zu vermieden.

Um das Regelverhalten, insbesondere das Schleppfehlerverhalten, der Regelungseinheiten R1, R2 zu verbessern, ist pro Achse X1, X2 jeweils eine Vorsteuereinheit V1, V2 vorgesehen. Die Vorsteuereinheiten V1, V2 erhalten jeweils die zugehörigen Sollgrößen w1, w2 und ermitteln daraus jeweils einen Vorsteuerwert v1, v2 zur Beaufschlagung auf die Stellgröße u1, u2. Die Vorsteuereinheit V1, V2 kann jeweils integraler Bestandteil der zugehörigen Regelungseinheit R1, R2 oder auch eigenständig ausgeführt sein.

Die Vorsteuereinheiten V1, V2 müssen jedoch mit geeigneten Vorsteuerparametern P1, P2 parametriert werden. Hierzu ist erfindungsgemäß jeweils eine Identifikationseinheit 11, I2 vorgesehen. Die Identifikationseinheiten 11, I2 erhalten jeweils eine Identifikations-Istgröße x1`, x2` aus der Mehrzahl Istgrößen der zugehörigen Achse X1, X2 und verwenden diese zur Ermittlung der Vorsteuerparameter P1, P2. Die Identifikations-Istgrößen x1`, x2' entsprechen vorzugsweise den korrespondierenden Istgrößen x1, x2.

Es werden vorzugsweise von einem zentral angeordneten Sollwertgenerator 3 oder miteinander synchronisierten Sollwertgeneratoren 3 Sollgrößen w1, w2, vorzugsweise Verläufe von Sollgrößen w1, w2, entsprechend miteinander synchronisierter Identifikationsprofile zur Verfügung gestellt. Diese Sollgrößen w1, w2 werden den zugehörigen Regelungseinheiten R1, R2 sowie den Vorsteuereinheiten V1, V2 und vorzugsweise auch den Identifikationseinheiten I1, I2 zur Verfügung gestellt.

Die Identifikationseinheiten I1, I2 können somit neben Identifikations-Istgrößen x1`, x2` aus der Mehrzahl Istgrößen der zugehörigen Achse X1, X2 auch Sollgrößen w1, w2 erhalten, um daraus die Vorsteuerparameter P1, P2 zu identifizieren. Die korrespondierenden Istgrößen x1, x2 korrespondieren mit den Sollgrößen w1, w2. Die Identifikations-Istgrößen x1`, x2` können den korrespondierenden Istgrößen x1, x2 entsprechen oder anderer Art sein.

Beispielsweise können die Regelungseinheiten R1, R2 jeweils als Positionsregler ausgeführt sein, womit sie Sollpositionen p1ₛₒₗₗ, p2ₛₒₗₗ als Sollgrößen w1, w2 empfangen und entsprechend Positionen p1, p2 als korrespondierende Istgrößen x1, x2 regeln. Den Identifikationseinheiten I1, I2 werden Identifikations-Istgrößen x1', x2` (aus der Anzahl Istgrößen) vorgegeben, um die Vorsteuerparameter P1, P2 zu identifizieren. Als Identifikations-Istgrößen x1`, x2` können beispielsweise die Positionen p1, p2 verwendet werden, womit die Identifikations-Istgrößen x1`, x2` den korrespondierende Istgrößen x1, x2 entsprechen. Als Identifikations-Istgrößen x1`, x2` können aber auch Ströme i1, i2 und/oder Drehmomente T1, T2, Geschwindigkeiten v1, v2, Beschleunigungen a1, a2 etc. verwendet werden. Zudem können den Identifikationseinheiten I1, I2 zur Ermittlung der Vorsteuerparameter P1, P2 die Sollgrößen w1, w2 (vorzugsweise Sollpositionen p1ₛₒₗₗ, p2ₛₒₗₗ) vorgegeben werden. Die Sollgrößen w1, w2 (im erwähnten Fall also die Sollpositionen p1ₛₒₗₗ, p2ₛₒₗₗ) werden pro Achse X1, X2 einheitlich vom Sollwertgenerator 3, vorzugsweise als Identifikationsprofil, vorgegeben, was allerdings miteinander synchronisiert erfolgt.

Eine Identifikation der Vorsteuerparameter P1, P2 auf Basis des zugehörigen Identifikationsprofils (d.h. des Verlaufs des Sollwerts w1, w2) und des Verlaufs des Identifikations-Istwerts x1', x2` erfolgt jedoch unabhängig voneinander in den einzelnen Identifikationseinheiten I1, I2. Die Identifikationseinheiten I1, I2 parametrieren weiters die Vorsteuereinheiten V1, V2 entsprechend der ermittelten Vorsteuerparameter P1, P2.

Die Vorsteuerparameter P1, P2 beinhalten vorteilhafterweise eine beschleunigungsproportionale Komponente (z.B. ein Massenträgheitsmoment), eine geschwindigkeitsproportionale Komponente (z.B. eine viskose Reibung), eine richtungsabhängige Komponente (z.B. statische Reibung in positive/negative Richtung) und/oder eine konstante Komponente (z.B. Gravitation).

Sind gleichartige Basisachsen X1, X2 über Kopplungspunkte K1, K2 mit der Antriebsachse Y mechanisch miteinander gekoppelt und die Kopplungspunkte K1, K2 mittig an den Basisachsen X1, X2 positioniert, so sind die jeweiligen Vorsteuerparameter P1, P2 der Vorsteuereinheiten V1, V2 identisch. Sind die Kopplungspunkte K1, K2 jedoch nicht mittig an den Basisachsen X1, X2 angeordnet, so variieren die Vorsteuerparameter P1, P2 der Vorsteuereinheiten V1, V2, insbesondere die Massenträgheiten als beschleunigungsabhängige Komponenten der Vorsteuerparameter P1, P2.

Es kann, wie erwähnt ein Objekt entlang der Antriebsachse Y verschiebbar angeordnet sein. Es ist vorteilhaft, wenn das Objekt jeweils an einer oder mehreren Extrempositionen entlang der Antriebsachse Y (z.B. an den Köpfen der Antriebachse Y) angeordnet ist und daraufhin eine erfindungsgemäße Identifizierung der Vorsteuerparameter P1, P2 erfolgt. So kann eine Identifikation der Vorsteuerparameter P1, P2 für den Fall, dass sich das Objekt an einem Kopf (in Fig 1 also an einem Kopplungspunkt K1, K2) der Y-Achse befindet (erste Extremposition), durchgeführt werden. Eine weitere Identifikation der Vorsteuerparameter P1, P2 kann für den Fall, dass sich das Objekt an einem anderen Kopf (in Fig. 1 also am anderen Kopplungspunkt K1, K2 befindet (zweite Extremposition), durchgeführt werden. Aus den identifizierten Vorsteuerparametern P1, P2 für die jeweiligen Extrempositionen des Objekts können mittels, z.B. linearer, Interpolation die Vorsteuerparameter P1, P2 für jede beliebige Objektposition entlang der Antriebsachse Y bestimmt werden. Damit sind die Vorsteuerparameter P1, P2 als Funktion der Objektposition bekannt.

## Patentansprüche

1. Verfahren zum Betrieb eines Mehrachssystems (1) mit einer Mehrzahl an Basisachsen (X1, X2) und zumindest einer Antriebsachse (Y), welche an Kopplungspunkten (K1, K2) mechanisch mit den Basisachsen (X1, X2) gekoppelt ist, wobei die Positionen (p1, p2) der Kopplungspunkte (K1, K2) an den Basisachsen (X1, X2) durch einen zugehörigen Motor (M1, M2) veränderbar sind, um die Antriebsachse (Y) in Relation zu den Basisachsen (X1, X2) zu bewegen, wobei den Motoren (M1, M2) zugehörige Regelungseinheiten (R1, R2) vorgesehen sind, welche aus vorgegeben Sollgrößen (w1, w2), vorzugsweise Sollpositionen (p1ₛₒₗₗ, p2ₛₒₗₗ), und aus zugehörigen sich am Motor (M1, M2) einstellenden korrespondierenden Istgrößen (x1, x2), vorzugsweise die Positionen (p1, p2), Stellgrößen (u1, u2) ermitteln und den Motoren (M1, M2) vorgeben, um die korrespondierenden Istgrößen (x1, x2) entsprechend der vorgegeben Sollgrößen (w1, w2) zu regeln, **dadurch gekennzeichnet, dass** jeweils eine den Motoren (M1, M2) zugehörige Vorsteuereinheit (V1, V2) vorgesehen ist, die jeweils ausgehend von der zugehörigen vorgegebenen Sollgröße (w1, w2) einen Vorsteuerwert (v1, v2) ermittelt und der zugehörigen Stellgröße (u1, u2) überlagert, **dass** ein Vorsteueridentifikationsvorgang vorgesehen ist, während welchem sich jeweils am Motor (M1, M2) einstellende Identifikations-Istgrößen (x1', x2') jeweils den Vorsteuereinheiten (V1, V2) zugehörigen Identifikationseinheiten (I1, I2), vorgegeben werden, wobei unter Verwendung der Identifikations-Istgrößen (x1`, x2') Vorsteuerparameter (P1, P2) identifiziert werden, **und dass** die Vorsteuereinheiten (V1, V2) mit den Vorsteuerparametern (P1, P2) parametriert werden.

2. Verfahren nach Anspruch 1, **dadurch gekennzeichnet, dass** während dem Vorsteueridentifikationsvorgang den Identifikationseinheiten (I1, I2) miteinander synchronisierte Sollgrößen (w1, w2) vorgegeben und von den Identifikationseinheiten (I1, I2) zur Identifikation der Vorsteuerparameter (P1, P2) verwendet werden.

3. Verfahren nach Anspruch 1 oder 2, **dadurch gekennzeichnet, dass** weitere Vorsteuerparameter aus den ermittelten Vorsteuerparametern (P1, P2) interpoliert werden.

4. Verfahren nach Anspruch 2 oder 3, **dadurch gekennzeichnet, dass** während dem Vorsteueridentifikationsvorgang den Identifikationseinheiten (I1, I2) Verläufe von miteinander synchronisierten Sollgrößen (w1, w2) vorgegeben und von den Identifikationseinheiten (I1, I2) zur Identifikation der Vorsteuerparameter (P1, P2) verwendet werden.

5. Verfahren nach einem der Ansprüche 2 bis 4, **dadurch gekennzeichnet, dass** die miteinander synchronisierten Sollgrößen (w1, w2) von einem zentralen Sollwertgenerator (3), oder von jeweils miteinander synchronisierten Sollwertgeneratoren (3) vorgegeben werden.

6. Verfahren nach einem der Ansprüche 1 bis 5, **dadurch gekennzeichnet, dass** während dem Vorsteueridentifikationsvorgang den Identifikationseinheiten (I1, I2) Verläufe der Identifikations-Istgrößen (x1`, x2') vorgegeben und von den Identifikationseinheiten (I1, I2) zur Identifikation der Vorsteuerparameter (P1, P2) verwendet werden.

7. Verfahren nach einem der Ansprüche 1 bis 6, **dadurch gekennzeichnet, dass** für den Vorsteueridentifikationsvorgang jeweils ein Iststrom, i1, i2, oder ein Istmoment, T1, T2, als Identifikations-Istgröße (x1', x2') verwendet wird.

8. Verfahren nach einem der Ansprüche 1 bis 7, **dadurch gekennzeichnet, dass** für den Vorsteueridentifikationsvorgang jeweils die Position (x1, x2) als Identifikations-Istgröße (x1', x2') verwendet wird.

9. Verfahren nach einem der Ansprüche 1 bis 8, **dadurch gekennzeichnet, dass** der Vorsteueridentifikationsvorgang vor einem Normalbetrieb des Mehrachssystems (1) und/oder während einem Normalbetrieb des Mehrachssystems (1) erfolgt.

10. Verfahren nach einem der Ansprüche 1 bis 9, **dadurch gekennzeichnet, dass** zumindest ein Teil der Motoren (M1, M2), vorzugsweise jeder Motor, ein rotativer Motor oder ein Linearmotor ist.

11. Verfahren nach einem der Ansprüche 1 bis 10, **dadurch gekennzeichnet, dass** während des Vorsteueridentifikationsvorgangs beschleunigungsproportionale und/oder geschwindigkeitsproportionale und/oder richtungsabhängige und/oder konstante Komponenten der Vorsteuerparameter (P1, P2) ermittelt werden.

12. Mehrachssystem (1) umfassend eine Mehrzahl an Basisachsen (X1, X2) und eine Antriebsachse (Y) wobei die Antriebsachse (Y) an Kopplungspunkten (K1, K2) mechanisch mit den Basisachsen (X1, X2) gekoppelt ist und die Positionen (p1, p2) der Kopplungspunkte (K1, K2) an den Basisachsen (X1, X2) jeweils durch einen zugehörigen Motor (M1, M2) veränderbar sind, um die Antriebsachse (Y) in Relation zu den Basisachsen (X1, X2) zu bewegen, wobei jeweils den Motoren (M1, M2) zugehörigen Regelungseinheiten (R1, R2) vorgesehen sind, welche ausgestaltet sind, aus vorgegebenen Sollgrößen (w1, w2), vorzugsweise Sollpositionen (p1ₛₒₗₗ, p2ₛₒₗₗ), und aus zugehörigen sich am Motor einstellenden korrespondierenden Istgrößen (x1, x2) Stellgrößen (u1, u2) zu ermitteln und den Motoren (M1, M2) vorzugeben, um diese korrespondierenden Istgrößen (x1, x2) entsprechend der Sollgrößen (w1, w2), vorzugsweise die Positionen (p1, p2), zu regeln, **dadurch gekennzeichnet, dass** jeweils den Basisachsen (X1, X2) zugehörige Vorsteuereinheiten (V1, V2) vorgesehen sind, welche ausgestaltet sind, aus den Sollgrößen (w1, w2) Vorsteuerwerte (v1, v2) zu ermitteln und den Stellgrößen (u1, u2) zu überlagern, **und dass** jeweils den Basisachsen (X1, X2) zugehörige Identifikationseinheiten (I1, I2) vorgesehen sind, welche jeweils ausgestaltet sind, unter Verwendung von sich am Motor einstellenden Identifikations-Istgrößen (x1, x2), vorzugsweise unter Verwendung von Verläufen der Identifikations-Istgrößen (x1, x2), Vorsteuerparameter (P1, P2) zu identifizieren und die Vorsteuereinheiten (V1, V2) mit den Vorsteuerparametern (P1, P2) zu parametrieren.

13. Mehrachssystem (1) nach Anspruch 12, **dadurch gekennzeichnet, dass** zumindest ein Sollwertgenerator (3) vorgesehen ist, welcher ausgestaltet ist, miteinander synchronisierte Sollgrößen (w1, w2) vorzugegeben, **und dass** die Identifikationseinheiten (I1, I2) jeweils ausgestaltet sind, die Vorsteuerparameter (P1, P2) unter Verwendung der miteinander synchronisierten Sollgrößen (w1, w2) zu ermitteln.

14. Mehrachssystem (1) nach Anspruch 13, **dadurch gekennzeichnet, dass** der zumindest eine Sollwertgenerator (3) ausgestaltet ist, Verläufe von miteinander synchronisierten Sollgrößen (w1, w2) vorzugegeben, **und dass** die Identifikationseinheiten (I1, I2) jeweils ausgestaltet sind, die Vorsteuerparameter (P1, P2) unter Verwendung der Verläufe der miteinander synchronisierten Sollgrößen (w1, w2) zu ermitteln.

15. Mehrachssystem (1) nach einem Anspruch 13 oder 14, **dadurch gekennzeichnet, dass** ein zentraler Sollwertgenerator (3) vorgesehen ist, welcher ausgestaltet ist, im Vorsteueridentifikationsvorgang miteinander synchronisierte Sollgrößen (w1, w2) vorzugegeben, **oder dass** miteinander synchronisierte Sollwertgeneratoren (3) vorgesehen sind, welche ausgestaltet sind, im Vorsteueridentifikationsvorgang miteinander synchronisierte Sollgrößen (w1, w2) vorzugegeben.

## Claims

1. Method for operating a multi-axis system (1) comprising a plurality of basic axes (X1, X2) and at least one drive axis (Y) which is mechanically coupled to the basic axes (X1, X2) at coupling points (K1, K2), the positions (p1, p2) of the coupling points (K1, K2) on the basic axes (X1, X2) being changeable by means of an associated motor (M1, M2) in order to move the drive axis (Y) in relation to the basic axes (X1, X2), closed-loop control units (R1, R2) being provided which are associated with the motors (M1, M2) and determine control input variables (u1, u2) from specified setpoint variables (w1, w2), preferably setpoint positions (p1ₛₒₗₗ, p2ₛₒₗₗ), and from associated corresponding actual variables (x1, x2), preferably the positions (p1, p2), occurring at the motor (M1, M2) and provide said control input variables to the motors (M1, M2) in order to control the corresponding actual variables (x1, x2) in accordance with the specified setpoint variables (w1, w2), **characterized in that** a feedforward control unit (V1, V2) associated with the motors (M1, M2) is provided in each case, which feedforward control unit in each case determines a feedforward control value (v1, v2) based on the associated specified setpoint variable (w1, w2) and superimposes said feedforward control value on the associated control input variable (u1, u2), **in that** a feedforward control identification process is provided, during which actual identification variables (x1', x2') occurring on each motor (M1, M2) are each provided to identification units (I1, I2) associated with the feedforward control units (V1, V2), feedforward control parameters (P1, P2) being identified using the actual identification variables (x1', x2'), **and in that** the closed-loop control units (R1, R2) are parameterized using the feedforward control parameters (P1, P2).

2. Method according to claim 1, **characterized in that,** during the feedforward control identification process, mutually synchronized setpoint variables (w1, w2) are provided to the identification units (I1, I2) and are used by the identification units (I1, I2) to identify the feedforward control parameters (P1, P2).

3. Method according to claim 1 or 2, **characterized in that** further feedforward control parameters are interpolated from the determined feedforward control parameters (P1, P2).

4. Method according to either claim 2 or claim 3, **characterized in that,** during the feedforward control identification process, profiles of mutually synchronized setpoint variables (w1, w2) are provided to the identification units (I1, I2) and are used by the identification units (I1, I2) to identify the feedforward control parameters (P1, P2).

5. Method according to any of claims 2 to 4, **characterized in that** the mutually synchronized setpoint variables (w1, w2) are specified by a central setpoint generator (3) or by setpoint generators (3) which are each synchronized with one another.

6. Method according to any of claims 1 to 5, **characterized in that,** during the feedforward control identification process, profiles of the actual identification variables (x1', x2') are provided to the identification units (I1, I2) and are used by the identification units (I1, I2) to identify the feedforward control parameters (P1, P2).

7. Method according to any of the claims 1 to 6, **characterized in that** an actual current (i1, i2) or an actual torque (T1, T2) is in each case used as the actual identification variable (x1', x2') for the feedforward control identification process.

8. Method according to any of claims 1 to 7, **characterized in that** the position (x1, x2) is in each case used as the actual identification variable (x1', x2') for the feedforward control identification process.

9. Method according to any of claims 1 to 8, **characterized in that** the feedforward control identification process takes place before normal operation of the multi-axis system (1) and/or during normal operation of the multi-axis system (1).

10. Method according to any of claims 1 to 9, **characterized in that** at least some of the motors (M1, M2), preferably each motor, are rotary motors or linear motors.

11. Method according to any of claims 1 to 10, **characterized in that,** during the feedforward control identification process, acceleration-proportional and/or speed-proportional and/or direction-dependent and/or constant components of the feedforward control parameters (P1, P2) are determined.

12. Multi-axis system (1) comprising a plurality of basic axes (X1, X2) and a drive axis (Y), the drive axis (Y) being mechanically coupled to the basic axes (X1, X2) at coupling points (K1, K2) and each of the positions (p1, p2) of the coupling points (K1, K2) on the basic axes (X1, X2) being changeable by means of an associated motor (M1, M2) in order to move the drive axis (Y) in relation to the basic axes (X1, X2), closed-loop control units (R1, R2) being provided which are each associated with the motors (M1, M2) and are designed to determine control input variables (u1, u2) from specified setpoint variables (w1, w2), preferably setpoint positions (p1ₛₒₗₗ, p2ₛₒₗₗ), and from associated corresponding actual variables occurring at the motor (x1, x2) and to provide said control input variables to the motors (M1, M2) in order to control these corresponding actual variables (x1, x2) in accordance with the setpoint variables (w1, w2), preferably the positions (p1, p2), **characterized in that** feedforward control units (V 1, V2) are provided which are each associated with the basic axes (X1, X2) and are designed to determine feedforward control values (v1, v2) from the setpoint variables (w1, w2) and to superimpose said values on the control input variables (u1, u2), **and in that** identification units (I1, I2) are provided which are each associated with the basic axes (X1, X2) and are each designed to identify feedforward control parameters (P1, P2) using actual identification variables (x1, x2) occurring at the motor, preferably using profiles of the actual identification variables (x1, x2), and to parameterize the feedforward control units (V1, V2) using the feedforward control parameters (P1, P2).

13. Multi-axis system (1) according to either claim 12, **characterized in that** at least one setpoint generator (3) is provided that is designed to specify mutually synchronized setpoint variables (w1, w2), **and in that** the identification units (I1, I2) are each designed to determine the feedforward control parameters (P1, P2) using the mutually synchronized setpoint variables (w1, w2).

14. Multi-axis system (1) according to claim 13, **characterized in that** the at least one setpoint generator (3) is designed to specify profiles of mutually synchronized setpoint variables (w1, w2), **and in that** the identification units (I1, I2) are each designed to determine the feedforward control parameters (P1, P2) using the profiles of the mutually synchronized setpoint variables (w1, w2).

15. Multi-axis system (1) according to either claim 13 or claim 14, **characterized in that** a central setpoint generator (3) is provided which is designed to specify mutually synchronized setpoint variables (w1, w2) in the feedforward control identification process, **or in that** mutually synchronized setpoint generators (3) are provided which are designed to specify mutually synchronized setpoint variables (w1, w2) in the feedforward control identification process.

## Revendications

1. Procédé pour faire fonctionner un système multi-axe (1) comportant une pluralité d'axes de base (X1, X2) et au moins un axe d'entraînement (Y) qui est accouplé mécaniquement aux axes de base (X1, X2) à des points d'accouplement (K1, K2), dans lequel les positions (p1, p2) des points d'accouplement (K1, K2) sur les axes de base (X1, X2) peuvent être modifiées par un moteur (M1, M2) associé pour déplacer l'axe d'entraînement (Y) par rapport aux axes de base (X1, X2), dans lequel des unités de régulation (R1, R2) associées aux moteurs (M1, M2) sont prévues, lesquelles unités de régulation déterminent, à partir de grandeurs de consigne prédéfinies (w1, w2), de préférence de positions de consigne (p1ₛₒₗₗ, p2ₛₒₗₗ), et à partir de grandeurs réelles (x1, x2) correspondantes qui se règlent sur le moteur (M1, M2), de préférence des positions (p1, p2), des grandeurs de réglage (u1, u2) et les fournissent aux moteurs (M1, M2) pour réguler les grandeurs réelles (x1, x2) correspondantes en fonction des grandeurs de consignes (w1, w2) prédéfinies, **caractérisé en ce qu'**une unité pilote (V1, V2) correspondant aux moteurs (M1, M2) respectivement est prévue, laquelle unité pilote détermine une valeur pilote (v1, v2) respectivement sur la base de la grandeur de consigne (w1, w2) prédéfinie correspondante, et se superpose à la grandeur de réglage (u1, u2) correspondante, **en ce qu'**un processus d'identification pilote est prévu, pendant lequel des grandeurs réelles d'identification (x1', x2') qui se règlent sur le moteur (M1, M2) sont respectivement fournies à des unités d'identification (11, I2) correspondant aux unités pilotes (V1, V2), dans lequel des paramètres pilotes (P1, P2) sont identifiés au moyen des grandeurs réelles d'identification (x1', x2'), et **en ce que** les unités pilotes (V1, V2) sont paramétrées à l'aide des paramètres pilotes (P1, P2).

2. Procédé selon la revendication 1, **caractérisé en ce que** des grandeurs de consigne (w1, w2) synchronisées entre elles sont fournies aux unités d'identification (11, I2) pendant le processus d'identification pilote, lesquelles grandeurs de consigne sont utilisées par les unités d'identification (11, I2) pour l'identification des paramètres pilotes (P1, P2).

3. Procédé selon la revendication 1 ou 2, **caractérisé en ce que** des paramètres pilotes supplémentaires sont interpolés à partir des paramètres pilotes (P1, P2) déterminés.

4. Procédé selon la revendication 2 ou 3, **caractérisé en ce que** des courbes de grandeurs de consigne (w1, w2) synchronisées entre elles sont fournies aux unités d'identification (11, I2) pendant le processus d'identification pilote, lesquelles grandeurs de consigne sont utilisées par les unités d'identification (11, I2) pour l'identification des paramètres pilotes (P1, P2).

5. Procédé selon l'une des revendications 2 à 4, **caractérisé en ce que** les grandeurs de consigne (w1, w2) synchronisées entre elles sont fournies par un générateur de valeurs de consigne (3) central ou par des générateurs de valeurs de consigne (3) synchronisés entre eux.

6. Procédé selon l'une des revendications 1 à 5, **caractérisé en ce que** des courbes des grandeurs réelles d'identification (x1', x2') sont fournies aux unités d'identification (11, I2) pendant le processus d'identification pilote, lesquelles grandeurs réelles sont utilisées par les unités d'identification (11, I2) pour l'identification des paramètres pilotes (P1, P2).

7. Procédé selon l'une des revendications 1 à 6, **caractérisé en ce que,** pour le processus d'identification pilote, un courant réel (i1, i2) ou un couple réel (T1, T2) est respectivement utilisé comme grandeur réelle d'identification (x1', x2').

8. Procédé selon l'une des revendications 1 à 7, **caractérisé en ce que,** pour le processus d'identification pilote, la position (x1, x2) est respectivement utilisée comme grandeur réelle d'identification (x1', x2').

9. Procédé selon l'une des revendications 1 à 8, **caractérisé en ce que** le processus d'identification pilote se déroule avant un fonctionnement normal du système multi-axe (1) et/ou pendant un fonctionnement normal du système multi-axe (1).

10. Procédé selon l'une des revendications 1 à 9, **caractérisé en ce qu'**au moins une partie des moteurs (M1, M2), de préférence chaque moteur, est un moteur rotatif ou un moteur linéaire.

11. Procédé selon l'une des revendications 1 à 10, **caractérisé en ce que,** pendant le processus d'identification pilote, des composants proportionnels à l'accélération et/ou proportionnels à la vitesse et/ou directionnels et/ou constants des paramètres pilotes (P1, P2) sont déterminés.

12. Système multi-axe (1) comprenant une pluralité d'axes de base (X1, X2) et un axe d'entraînement (Y), dans lequel l'axe d'entraînement (Y) est accouplé mécaniquement aux axes de base (X1, X2) à des points d'accouplement (K1, K2) et les positions (p1, p2) des points d'accouplement (K1, K2) sur les axes de base (X1, X2) peuvent être respectivement modifiées par un moteur (M1, M2) associé pour déplacer l'axe d'entraînement (Y) par rapport aux axes de base (X1, X2), dans lequel des unités de régulation (R1, R2) associées aux moteurs (M1, M2) sont respectivement prévues, lesquelles unités de régulation sont conçues pour déterminer, à partir de grandeurs de consigne prédéfinies (w1, w2), de préférence de positions de consigne (p1ₛₒₗₗ, p2ₛₒₗₗ), et à partir de grandeurs réelles (x1, x2) correspondantes qui se règlent sur le moteur (M1, M2), des grandeurs de réglage (u1, u2) et les fournir aux moteurs (M1, M2) pour réguler ces grandeurs réelles (x1, x2) correspondantes, de préférence les positions (p1, p2), en fonction des grandeurs de consignes (w1, w2), **caractérisé en ce que** des unités pilotes (V1, V2) correspondant aux axes de base (X1, X2) sont respectivement prévues, lesquelles unités pilotes sont conçues pour déterminer des valeurs pilotes (v1, v2) sur la base des grandeurs de consigne (w1, w2), et se superposer aux grandeurs de réglage (u1, u2), et **en ce que** des unités d'identification (11, I2) associées aux axes de base sont respectivement prévues, lesquelles unités d'identification sont conçues pour identifier des paramètres pilotes (P1, P2) au moyen de grandeurs réelles d'identification (x1, x2) qui se règlent sur le moteur, de préférence au moyen de courbes des grandeurs réelles d'identification (x1, x2), et pour paramétrer les unités pilotes (V1, V2) à l'aide des paramètres pilotes (P1, P2).

13. Système multi-axe (1) selon la revendication 12, **caractérisé en ce qu'**au moins un générateur de valeurs de consigne (3) est prévu, lequel est conçu pour fournir des grandeurs de consigne (w1, w2) synchronisées entre elles, et **en ce que** les unités d'identification (11, I2) sont respectivement conçues pour déterminer les paramètres pilotes (P1, P2) au moyen des grandeurs de consigne (w1, w2) synchronisées entre elles.

14. Système multi-axe (1) selon la revendication 13, **caractérisé en ce que** l'au moins un générateur de valeurs de consigne (3) est conçu pour fournir des courbes de grandeurs de consigne (w1, w2) synchronisées entre elles, et **en ce que** les unités d'identification (11, I2) sont respectivement conçues pour déterminer les paramètres pilotes (P1, P2) au moyen des courbes de grandeurs de consigne (w1, w2) synchronisées entre elles.

15. Système multi-axe (1) selon l'une des revendications 13 ou 14, **caractérisé en ce qu'**un générateur de valeurs de consigne (3) central est prévu, lequel est conçu pour fournir, au cours du processus d'identification pilote, des grandeurs de consigne (w1, w2) synchronisées entre elles, ou **en ce que** des générateurs de valeurs de consigne (3) synchronisés entre eux sont prévus, lesquels sont conçus pour fournir, au cours du processus d'identification pilote, des grandeurs de consigne (w1, w2) synchronisées entre elles.
